**Europäisches Patentamt**

**European Patent Office**

**Office européen des brevets**

(19)

(11) Veröffentlichungsnummer: **0 045 330**

**A1**

# (12) EUROPÄISCHE PATENTANMELDUNG

(21) Anmeldenummer: **80104622.8**

(22) Anmeldetag: **06.08.80**

(51) Int. Cl.³: **B 01 D 39/08**

(43) Veröffentlichungstag der Anmeldung:
**10.02.82 Patentblatt 82/6**

(84) Benannte Vertragsstaaten:
**AT BE CH DE FR GB IT LI LU NL SE**

(71) Anmelder: **Girmes-Werke AG**

**D-4155 Grefrath 1(DE)**

(72) Erfinder: **Kerres, Bruno, Dr. Dipl.-Ing.**
**Büschen 27**
**D-4054 Nettetal 1 Hinsbeck(DE)**

(72) Erfinder: **Ehrler, Peter, Dr. Dipl.-Ing.**
**Gayler Strasse 23**
**D-7401 Reutlingen(DE)**

(72) Erfinder: **Saiger, Wolfgang, Dipl.-Ing.**
**Bochlinger Strasse 538**
**D-7000 Stuttgart 80(DE)**

(74) Vertreter: **Gille, Christian, Dipl.-Ing.**
**Redies , Redies, Türk & Gille Bruckner Strasse 20**
**D-4000 Düsseldorf 13(DE)**

(54) **Mikrofilter und Verfahren zu seiner Herstellung.**

(57) Ein Mikrofilter zum Abscheiden von Feststoff-Partikeln einer Größe von etwa 0,1 bis 10 μm aus Strömungsmitteln, beispielsweise Flüssigkeiten, das aus einem dreidimensionalen textilen Flächengebilde besteht und im Pol und/oder im Rücken durch chemische Behandlung aufgespleißte feine fibrillenartige Fasern oder Fäden enthält, welche beispielsweise aus Kunststoff bestehen. Dieses Mikrofilter kann heregestellt werden, indem man ein dreidimensionales textiles Flächengebilde wie ein Polgewebe oder -gewirke ganz oder teilweise aus spleißbare Chemiefasern ethalten-den Garnen herstellt und das Flächengebilde dann derart behandelt, daß die Chemiefasern längs ihrer Achse zu fibrillenartigen Teilfasern mit Stärken in der Größenordnung von 0,05 bis 0,5 dtex aufspleißen.

G 52 335

## Mikrofilter und Verfahren zu seiner Herstellung

Die Erfindung betrifft einen Mikrofilter zum Abscheiden von Feststoff-Partikeln einer Größe von etwa
0,1 bis 10 µm aus Strömungsmitteln, beispielsweise
Flüssigkeiten, das aus einem textilen Flächengebilde
besteht. Außerdem betrifft die Erfindung ein Verfahren
zum Herstellen derartiger Mikrofilter.

Mikrofilter werden verwendet, um aus Flüssigkeiten
kleine Feststoff-Partikel abzuscheiden, deren Durchmesser im Bereich von etwa 0,1 bis 10 µm liegt. Die
Mikrofiltration liegt daher im Bereich zwischen der
Naßfiltration und der Ultrafiltration.

Für die Mikrofiltration werden bisher bevorzugt zwei
Prinzipien angewendet, nämlich die Siebfiltration mit
Membranfiltern und die Tiefenfiltration mit hochwertigen Vliesstoffen. Die Membranfilter bestehen aus
mikroporösen Kunststoffen mit fibrillenähnlicher
Struktur. Für die Tiefenfiltration verwendet man
spezielle hochwertige Vliesstoffe. Diese beiden Filterarten weisen eine statistische Netzwerkgeometrie auf.
Wegen der hohen Anforderungen an die Porengleichmäßigkeit sind die für die Mikrofiltration bekannten Filter vergleichsweise teuer. Rückspülmöglichkeiten sind, da die Filter nur zweidimensional sind und eine dritte Dimension dementsprechend nicht zugänglich ist, begrenzt bzw. fehlen ganz. Der Druckverlust über die bekannten Filter beginnt auf relativ hohem Niveau und nimmt zeitabhängig beträchtlich zu.

Andererseits sind auch Gewebefilter bekannt. Die Dichte derartiger Filter bzw. deren Porengröße ist durch die Gewebekonstruktion eindeutig bestimmt. Dieser Vorteil einer definierten Geometrie der Gewebefilter läßt sich aber für Mikrofilter nicht nutzen, weil der Durchmesser der Fasern oder Fäden und damit die Fadenabstände im Gewebe zu groß sind, so daß kleinere Partikel in der Größenordnung von 0,1 bis 10 $\mu$m nicht oder zumindest nicht mit ausreichender Sicherheit zurückgehalten werden können.

Die Aufgabe der Erfindung besteht darin, ein preiswerteres und leistungsfähigeres Mikrofilter zu schaffen.

Diese Aufgabe wird erfindungsgemäß dadurch gelöst, daß das Filter aus einem dreidimensionalen textilen Flächengebilde besteht, welches im Pol und/oder im Rücken durch chemische Behandlung aufgespleißte feine fibrillenartige Fasern oder Fäden enthält, deren Einzelquerschnitte vorzugsweise in der Größenordnung von 0,05 bis 0,5 dtex liegen.

Durch die Erfindung wird mit Hilfe von Spezialfasern ein Mikrofilter auf Basis eines dreidimensionalen textilen Flächengebildes geschaffen, das infolge seiner definierten Geometrie und seines neuartigen Aufbaues ein besonders günstiges Preis / Leistungsverhältnis bietet. Gegenüber bekannten Mikrofiltern arbeitet das erfindungsgemäße Mikrofilter mit besonders geringem Druckverlust und hoher Durchflußleistung, wobei eine einfache und weitgehende Abreinigung durch Rückspülung möglich ist.

Durch Verwendung von Spezialfasern, die nach Verarbeitung zu einem dreidimensionalen textilen Flächengebilde auf einer Textilmaschine durch chemische Nachbehandlung entlang ihrer Faserachse aufgespleißt werden, erhält man im Flächengebilde fibrillenähnliche Teilfasern, deren äquivalente Stärken oder Dicken in der Größenordnung von 0,05 bis 0,5 dtex liegen. Derartige Fasern kann man im Pol und/oder Rücken des dreidimensionalen Flächengebildes vorsehen, so daß die für das zu filtrierende Medium zugängliche und damit filterwirksame Faseroberfläche des textilen Filters vervielfacht wird und somit eine Mikrofiltration erzielt werden kann.

Das textile Flächengebilde kann die Form eines Samtes oder Plüsches mit gewebtem oder gewirktem Rücken aufweisen oder ein nicht aufgeschnittenes Doppelplüschgewebe, bei dem die beiden auf der Doppelplüschwebmaschine oder der Doppelplüschraschelmaschine entstandenen Grundgewebe oder Substrate nicht voneinander getrennt, sondern durch die Polfäden zusammengehalten sind. Wichtig ist, daß ein Grundgewebe oder Grundgewirke definierter Geometrie Polfasern als die Komponente dritter Dimension hält, wobei die Polfasern oder Polfäden ebenso wie die das Grundgewebe oder Grundgewirke bildenden Garne oder Fäden wenigstens teilweise aus in ihrer Längsrichtung spleißbaren Fasern wie Chemiefasern bestehen.

Dieses dreidimensionale textile Flächengebilde wird zunächst auf einer herkömmlichen Textilmaschine wie einer Webmaschine oder einer Raschelmaschine hergestellt und in seine endgültige äußere Form gebracht, beispielsweise im Pol aufgeschnitten, falls eine aufgeschnittene Polware gewünscht ist. Anschließend erfolgt eine die spleißbaren Fasern aufspleißende Behandlung der soweit fertiggestellten Ware mit einem geeigneten chemischen Behandlungsmittel. Dann kann aus der so hergestellten und fertigbehandelten Ware ein Filter der gewünschten Größe bzw. Fläche geschnitten werden.

Das erfindungsgemäße textile Mikrofilter hat folgende, für Filter neuartige Eigenschaften:

a) die Anzahl der Einzelfasern im Pol und gegebenenfalls auch im Rücken des dreidimensionalen textilen Flächengebildes ist extrem groß;

b) in der Palette textiler Werkstoffe haben die durch Aufspleißen erzielten fibrillenähnlichen Fasern trotz nutzbarer Längen von mehr als 30 mm den kleinsten äquivalenten Durchmesser;

c) besteht das Mikrofilter aus einfacher Polware, ist die dritte Dimension, d.h. die einzelnen Polfasern, voll zugänglich.

Sowohl Einfach-Plüschware als auch Doppelplüschware erfüllen die Forderung nach einer definierten Geometrie des Filters. Die filterwirksamen kapillarähnlichen Hohlräume und die fibrillenähnlichen Fasern können hinsichtlich ihrer Anzahl, ihrer Länge und ihrer Packungsdichte in weiten Grenzen variiert werden. Dabei liegen die Hohlräume und die Fasern stets parallel zueinander, so daß die definierte Geometrie in jedem Falle gewährleistet ist.

EPA- u. PCT-SATZSPIEGEL-PAPIER
HERMANN ARZT GMBH, MÜNCHEN, TEL. (089) 4480431

Es sind aber auch weitgehende Variationen im Aufbau des Rückens der Plüschware möglich. Dies gilt für die Dichte, für die Dicke und das verwendete Material. So kann der Rücken bzw. die Rückenschicht der Ware sowohl als reines Trägermaterial als auch als aktive Filterschicht dienen. Im letztgenannten Falle erfolgt die Filtration also nicht nur an den Polfasern, sondern auch am bzw. im Rücken des dreidimensionalen Flächengebildes.

Nachstehend werden zwei Beispiele für auf einer Doppelplüschwebmaschine hergestellte dreidimensionale textile Flächengewebe angegeben, die als Mikrofilter gemäß der vorliegenden Erfindung benutzt werden können. Dabei kann es sich sowohl um eine aufgeschnittene Ware (Einfach-Plüsch) oder ein nicht aufgeschnittenes Doppelgewebe handeln.

Beispiel 1

Kette: Spleißfaser, Handelsname "Bellima X"
      150 den/192 filament in nicht-gesplitteten Zustand
      25 Faden/cm
Schuß: wie Kette
      30 Faden/cm
Pol  : wie Kette, 4-Schuß Pol-auf
Polhöhe: 4 - 6 mm

Beispiel 2

Polwirkware: Pol und Rücken als Spleißgarn,
Querrichtung 12 Noppen pro cm
Längsrichtung 8 Noppen pro cm

Noppenlänge über Grund: ca.  8 mm
Gesamtnoppenlänge    : ca. 14 mm

Die Spleißfasern können Polyäthylenterephtalat zusammen mit Polyamid in einem Fadenquerschnitt oder Polyäthylenterephtalat-Fibrillen, zwischen die Polystyrol im Faserquerschnitt eingelagert ist, aufweisen.

Die chemische Behandlung der Ware zum Aufspleißen bzw. Zerteilen der Fäden oder Fibrillen kann durch Behandlung in Quellmitteln wie wässerigen Dispersionen von Benzylalkohol oder durch Behandlung in Lösungsmitteln wie Perchloräthylen oder Methylenchlorid erfolgen.

G/uh

Patentansprüche:

1. Mikrofilter zum Abscheiden von Feststoff-Partikeln einer Größe von etwa 0,1 bis 10 /um aus Strömungsmitteln, beispielsweise Flüssigkeiten, bestehend aus einem textilen Flächengebilde, d a d u r c h g e k e n n z e i c h n e t, daß das Flächengebilde dreidimensional ausgebildet ist und im Pol und/oder im Rücken durch chemische Behandlung aufgespleißte feine fibrillenartige Fasern oder Fäden enthält.

2. Filter nach Anspruch 1, dadurch gekennzeichnet, daß die aufgespleißten Fasern aus Kunststoff bestehen.

3. Filter nach Anspruch 1 oder 2, dadurch gekennzeichnet, daß das dreidimensionale Flächengebilde ein aufgeschnittenes Polgewebe oder -gewirke ist.

4. Filter nach Anspruch 1 oder 2, dadurch gekennzeichnet, daß das dreidimensionale Flächengebilde ein nicht aufgeschnittenes Doppelplüschgewebe oder -gewirke ist.

5. Verfahren zum Herstellen von Mikrofiltern gemäß einem der Ansprüche 1 bis 4, dadurch gekennzeichnet, daß man ein dreidimensionales textiles Flächengebilde wie ein Polgewebe oder -gewirke ganz oder teilweise aus spleißbare Chemiefasern enthaltenden Garnen herstellt und das Flächengebilde dann derart behandelt, daß die Chemiefasern längs ihrer Achse zu fibrillenartigen Teilfasern mit Stärken in der Größenordnung von 0,05 bis 0,5 dtex aufspleißen.

G/uh

Europäisches
Patentamt

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 1 482 474 (E.O. RIEDEL) <br> * Fig. 13 * <br> -- | 1 |
| A | DE - B - 1 032 224 (FRAM CORP.) <br> * Anspruch 1 * <br> -- | |
| A | DE - A - 1 611 084 (FILTERITE CORP.) <br> * Fig. 5, 6 * <br> -- | |
| A | DE - A - 2 232 178 (YAMAHA HATSUDOKI) <br> * Fig. 2 * <br> -- | |
| A | DE - A - 2 260 386 (A. MARGRAF) <br> * Anspruch 5 * <br> -- | |
| A | DE - A - 2 403 971 (GHH BASEL) <br> * Ansprüche 2, 3, 6 * <br> -- | |
| A | DE - A1 - 2 754 305 (TEIJIN) <br> * Ansprüche 1, 9 * <br> -- | |
| A | DE - U - 1 959 924 (VEREINIGTE SEIDEN-WEBEREIEN) <br> * Fig. * <br> -- | |
| A | US - A - 2 945 557 (M.A. POWERS) <br> * Fig. 5 bis 9 * <br> -- <br> ./.. | |

**KLASSIFIKATION DER ANMELDUNG (Int. Cl.³)**

B 01 D 39/08

**RECHERCHIERTE SACHGEBIETE (Int. Cl.³)**

B 01 D 39/00
B 01 D 39/08
B 01 D 39/14
B 01 D 39/16
B 01 D 39/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 29-05-1981 | KÜHN |

EPA form 1503.1 06.78

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) · |
|---|---|---|---|
| Kategorie | Kennzeichnung des Dokuments mit Angabe, soweit erforderlich, der maßgeblichen Teile | betrifft Anspruch | |
| A | US − A − 3 018 845 (M.A. POWERS)<br>* Fig. 2 bis 4 * | | |
| | | | **RECHERCHIERTE SACHGEBIETE (Int. Cl.³)** |

EPA Form 1503.2   06.78